# EUROPEAN PATENT SPECIFICATION

(11) **EP 3 763 993 B1**
(45) Date of publication and mention of the grant of the patent: **21.02.2024**
(21) Application number: 20194337.0
(22) Date of filing: 11.07.2018
(51) Int. Cl.: F21S 43/27, F21S 43/237, F21S 43/245, F21V 8/00

(54) **AUTOMOTIVE LIGHT**
KRAFTFAHRZEUGLICHT
PHARE AUTOMOBILE

(43) Date of publication of application: 13.01.2021
(62) Divisional of application: 18183016.7
(73) Proprietor: Marelli Automotive Lighting Italy S.p.A., 10078 Venaria Reale (TO) (IT)
(72) Inventor: FADI, Denis, 33028 Tolmezzo (UD) (IT); RIZZI, Fulvio, 33028 Tolmezzo (UD) (IT)
(74) Representative: Studio Torta S.p.A.

(56) References cited:
- EP-A1- 2 479 487
- EP-A1- 2 775 197
- EP-A2- 2 562 045
- WO-A1-2012/098123
- CN-U- 205 245 020
- US-A1- 2013 215 633

## Description

The present invention relates to an automotive light and to the related assembly method.

More specifically, the present invention relates to a taillight for cars and similar vehicles, i.e. a lighting apparatus adapted to be incorporated into a motor vehicle with the function of signalling the position, the sudden deceleration and/or the turning direction, and/or with the function of lighting the area surrounding the vehicle. A use to which the following disclosure specifically refers without however any loss of generality.

As we know, the taillights for cars and the like generally comprise: a rigid and substantially basin-shaped rear casing, which is structured to be stably recessed into a compartment specially realized in the rear part of the vehicle bodywork; a front half-shell which is arranged to close the mouth of the rear casing so as to surface outside of the vehicle bodywork, and is provided with a plurality of transparent or semitransparent sectors, generally of a different colour from one another; and a series of lighting assemblies which are located inside the body, each immediately beneath a respective transparent or semi-transparent sector of the front half-shell, so as to be able to selectively backlight the superjacent transparent or semitransparent sector of the front half-shell.

In the most modern taillights, the front half-shell is usually provided with one or more oblong and substantially ribbon-like, transparent or semitransparent sectors, i.e. with a narrow and very elongated shape.

The backlighting of the single ribbon-like transparent or semitransparent sectors of the front half-shell is usually carried out via lighting assemblies that comprise: a light-guide bar that is normally made of a transparent plastic material, and extends inside the rear casing with a flank skimmed over the ribbon-like sector to be backlighted substantially for the whole length of the same sector; and one or more high-power LEDs (acronym of Light Emitting Diode) that are fixed to a small printed circuit board which, in turn, is located inside the rear casing close to at least one of the ends of the light-guide bar, so that the LEDs abut on the end of the light-guide bar and direct the light straight inside the body of the light-guide bar.

The light emitted by the LED or LEDs then travel inside the light-guide bar by total internal reflection, and exits from the flank of the bar directly facing the transparent or semitransparent sector to be backlit.

Even though it works extremely well, the backlighting system of the ribbon-like sectors of the front half-shell makes the assembly of the light relatively laborious.

In fact, the operator firstly has to fix inside the rear casing the printed circuit board accommodating the LED or LEDs of the lighting assembly, and then has to place the light-guide bar inside the body perfectly aligning the end of the light-guide bar with the LED(s).

Unfortunately the LEDs of the lighting assembly are very fragile and costly electronic components, hence the operator has to be very careful when inserting the light-guide bar inside the rear casing in order to avoid risks for the structural integrity of the LEDs. A caution that clearly results in a lengthening of the assembly times.

EP2775197 and WO2016/097322 describe some constructive solutions to constrain/couple the end of the light-guide bar firmly to the printed circuit board accommodating the LED(s) of the lighting assembly, while safeguarding at same time the structural integrity of the LEDs.

However, these interlocking systems make the assembly of the taillight more laborious, because the operator, in order to lock the end of the light-guide bar on top of the printed circuit board, often has to bend the piece with all the risks that this entails.

CN205245020U moreover discloses an interlocking system that includes several oblique surfaces for centring the end of the light-guide bar over the LEDs.

Aim of the present invention is to simplify and speed up the mounting of the light-guide bar inside the automotive light, while safeguarding at same time the structural integrity of the LEDs of the lighting assembly.

In accordance with these aims, according to the present invention there is provided an automotive light as defined in claim 1 and preferably, though not necessarily, in any one of the depending claims.

The present invention will now be described with reference to the accompanying drawings illustrating a nonlimiting embodiment thereof, in which:
- Figure 1 is a partially-exploded perspective view of an automotive light realized according to the teachings of the present invention;
- Figure 2 is a perspective view of the inside of the automotive light shown in Figure 1, with parts removed for clarity;
- Figure 3 is an exploded perspective view of a lighting assembly of the automotive light shown in Figures 1 and 2, realized according to the teachings of the present invention;
- Figure 4 is a perspective view of an end of the light-guide bar of the lighting assembly shown in Figure 3;
- Figure 5 is a perspective view of a second component of the lighting assembly shown in Figure 3; whereas
- Figures 6, 7 and 8 show some steps of the mounting of the automotive light shown in the previous Figures.

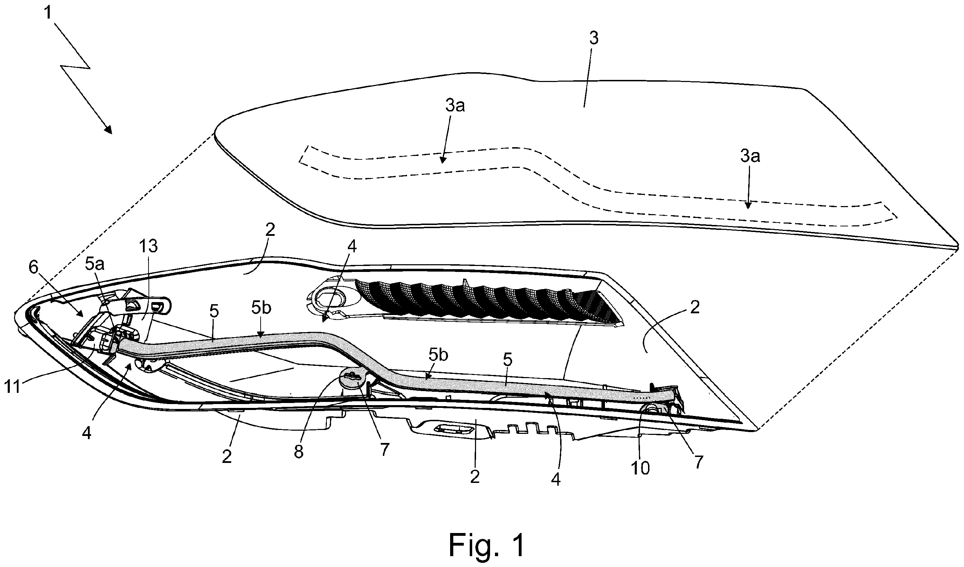

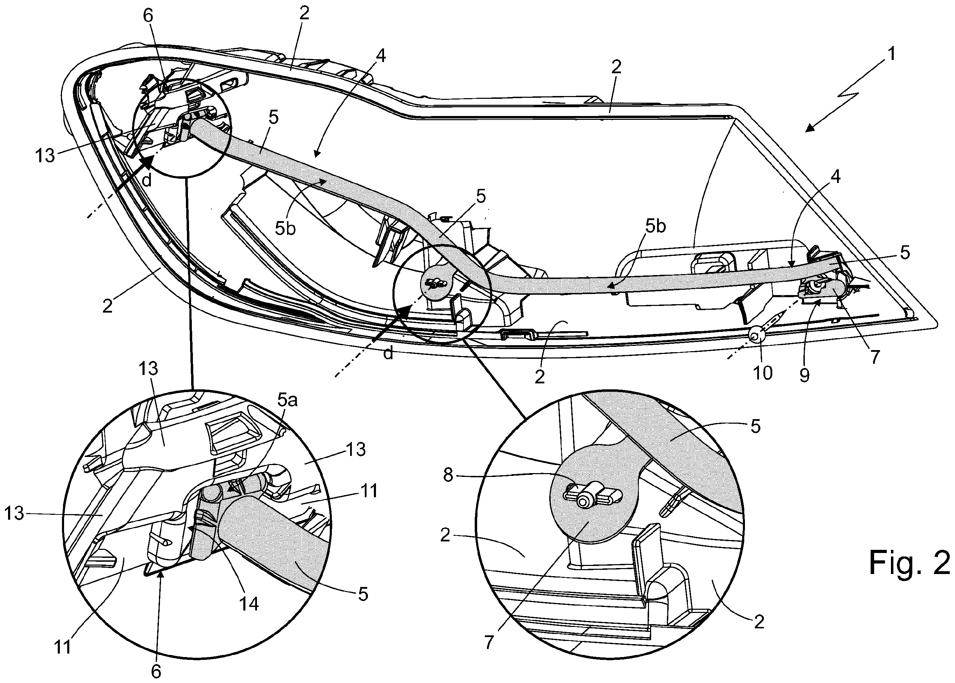

With reference to Figures 1 and 2, numeral 1 denotes as a whole an automotive light, i.e. a lighting device particularly adapted to be placed on the front or rear of the bodywork (not shown) of a motor vehicle, with the function of emitting light signals able to signal the position of the vehicle and/or the turning direction of the vehicle while driving and/or the sudden deceleration of the vehicle.

In other words, the automotive light 1 is adapted to be fixed to the front or rear part of the bodywork of a car, van, truck, motorcycle or other similar motor vehicle, to perform the function of a headlight or taillight.

In the example shown, in particular, the automotive light 1 is preferably structured to be stably recessed into the rear part of the bodywork (not shown) of a car or other similar motor vehicle.

In other words, the automotive light 1 is a taillight for cars and the like.

Obviously, in a different embodiment the automotive light 1 may be also structured to be simply cantilever fixed to the rear part of the vehicle bodywork.

With reference to Figures 1 and 2, the automotive light 1 firstly comprises: a rear casing 2, substantially rigid and preferably made of plastic material, which is substantially basin-shaped and is preferably structured so as to be at least partially recessed inside a seat specially made in the rear part of the vehicle bodywork (not shown); a front half-shell 3, substantially rigid and preferably made of plastic material, which is arranged to close the mouth of rear casing 2 preferably so as to surface outside of the vehicle bodywork; and one or more electrically-powered lighting assemblies that emit light on command and are located inside the casing, each one immediately beneath a respective transparent or semitransparent sector of the front half-shell 3, so as to be able to selectively backlight the superjacent transparent or semitransparent sector of the front half-shell 3.

In the example shown, in particular, automotive light 1 is preferably provided with a plurality of electrically-powered lighting assemblies, each of which is located inside the rear casing 2 in a position to be able to selectively backlight solely the superjacent transparent or semitransparent sector of front half-shell 3, preferably separately and independently from the other lighting assemblies of the automotive light.

In addition, in the example shown the rear casing 2 is preferably made of an opaque plastic material, preferably via an injection moulding process.

Instead the front half-shell 3, traditionally also called "external lens", is preferably made of a transparent or semitransparent plastic material, such as for example polycarbonate (PC) or polymethylmethacrylate (PMMA), again preferably via an injection moulding process.

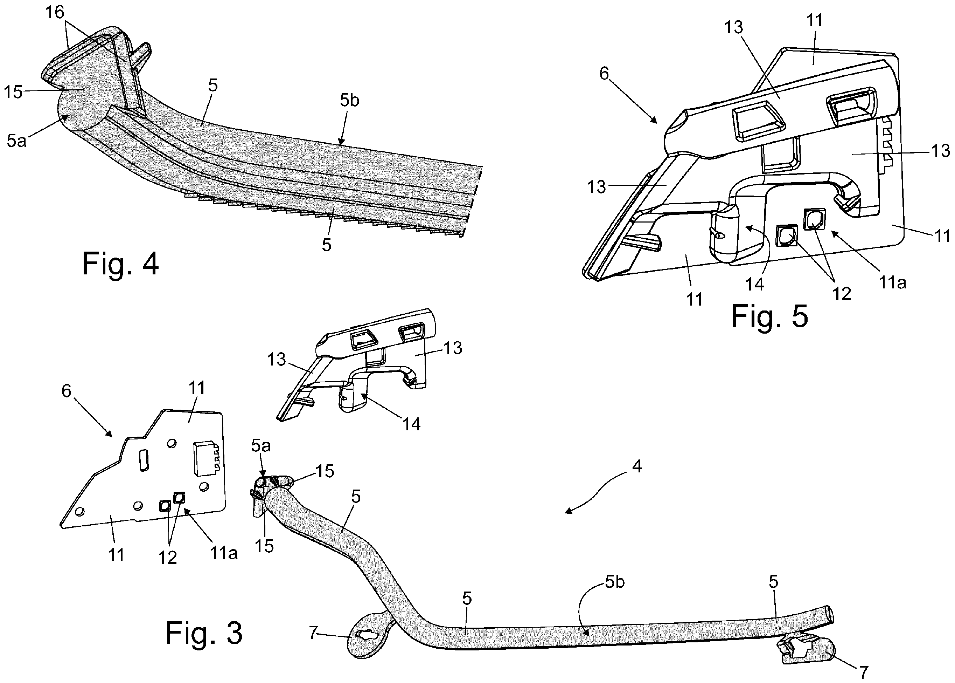

With reference to Figures 1 to 5, the front half-shell 3 is preferably provided with at least one transparent or semitransparent sector 3a with a narrow and elongated shape, i.e. substantially ribbon-like.

The lighting assembly 4 that preferably backlights said transparent or semitransparent sector 3a of the front half-shell 3a, in turn comprises:
- a preferably curvilinear and preferably with a variable section, light-guide bar 5 which is made of a photoconductive material and extends inside the rear casing 2, preferably so that at least one segment of the same bar is locally substantially skimmed over the ribbon-like sector 3a to be backlighted, preferably substantially for the whole length of the same ribbon-like sector 3a; and
- at least one electrically-powered and with controlled switching on and off, light source 6 which is located inside the rear casing 2, close to a proximal end 5a of the light-guide bar 5, and is structured to selectively emit, and direct towards the proximal end 5a of the bar, a light beam that enters into the body of light-guide bar 5 through the same proximal end 5a.

The light-guide bar 5 is additionally structured to channel the light emitted by the light source 6 up to the front half-shell 3, by total internal reflection.

In other words, once entered into the body of the light-guide bar 5, the light beam emitted by the light source 6 travels inside the light-guide bar 5 towards the other end of the light-guide bar 5 (i.e. the distal end of the bar) by total internal reflection, and is forced to exit in known manner from the light-guide bar 5 along the flank 5b of the bar that directly faces/is skimmed over the ribbon-like sector 3a to be backlighted.

More in detail, the light-guide bar 5 preferably has a monolithic structure and is preferably made of polycarbonate (PC), of polymethylmethacrylate (PMMA) or of another transparent plastic material, preferably via an injection moulding process.

In addition, the light-guide bar 5 is suspended/ supported inside the rear casing 2 by at least one and preferably a plurality of oblong supporting brackets 7 that cantilever jut out from the light-guide bar 5 and rest on the rear casing 2.

Moreover, at least one of the supporting brackets 7 is adapted to engage/couple with a corresponding fastening pin 8, that cantilevered protrudes from the internal surface of the rear casing 2 parallel to a given mounting direction d. Preferably, at least one of the supporting brackets 7 is furthermore made in one piece with the light-guide bar 5.

In addition, at least one of supporting brackets 7 is preferably rigidly fixed to the rear casing 2 via an anchor screw 10.

In the example shown, in particular, the light-guide bar 5 is preferably suspended/supported by two supporting brackets 7 that cantilevered jut out from the light-guide bar 5 preferably more or less perpendicularly to the bar longitudinal axis.

The first supporting bracket 7 is preferably roughly located at the middle of light-guide bar 5, and is able to engage/couple with a corresponding fastening pin 8 that cantilevered sticks out from the internal surface of the rear casing 2 parallel to the mounting direction d, and is preferably made in one piece with rear casing 2.

The second supporting bracket 7, in turn, is preferably located near the distal end of the light-guide bar 5, and is preferably able to abut on a shoulder 9 made on the internal surface of the rear casing 2.

Preferably the second supporting bracket 7 is moreover held firmly in abutment against the shoulder 9 by a small anchor screw 10 that preferably extends parallel to the mounting direction d, and is able to engage in pass-through manner the second supporting bracket 7 before penetrating into the shoulder 9.

With particular reference to Figures 2, 3, 4 and 5, the light source 6, on the other hand, is preferably fixed in rigid manner to the rear casing 2.

In addition, the light source 6 comprises: a rigid and platelike supporting board 11 which is located inside the rear casing 2, adjacent to the proximal end 5a of light-guide bar 5; and one or more LEDs 12 (acronym of Light Emitting Diode) that are placed one next to the other on a same face of supporting board 11, so as to directly face the proximal end 5a of light-guide bar 5.

Furthermore, the light source 6 preferably additionally includes a protective cover 13, substantially rigid and preferably made of plastic material, which is arranged to partly cover the face of supporting board 11 accommodating the LED or LEDs 12, and is preferably also firmly fixed to the supporting board 11.

More in detail, the supporting board 11 is preferably fixed on a supporting framework present inside the rear casing 2, preferably via one or more anchor screws (not shown). In addition, the supporting framework is preferably made in one piece with the rear casing 2.

Moreover, the supporting board 11 preferably also incorporates the power supply and/or control circuits of the LED or LEDs 12.

With reference to Figures 2, 3 and 5, on the other hand, the LED(s) 12 are placed on the front face of the supporting board 11, inside a small and limited active area 11a which receives in abutment the proximal end 5a of light-guide bar 5, and is preferably substantially complementary in shape to the same proximal end 5a of the bar.

The protective cover 13, in turn, is preferably shaped so as to at least partly delimit/flank/surround the active area 11a of supporting board 11.

In other words, the protective cover 13 is shaped so as to leave exposed at least the active area 11a of supporting board 11 where the LEDs 12 are located.

Finally, the protective cover 13 is preferably made of an opaque plastic material, preferably via an injection moulding process.

With reference to Figures 2, 3 and 5, in addition the light source 6 also comprises an oblique guiding slide 14 which is located on the supporting board 11, beside the active area 11a accommodating the LED(s) 12.

The oblique guiding slide 14 is slanted towards the active area 11a of supporting board 11, ends substantially at the perimeter border of the active area 11a, and is dimensioned/structured to guide, or rather to slide, the proximal end 5a of light-guide bar 5 up to the active area 11a of supporting board 11.

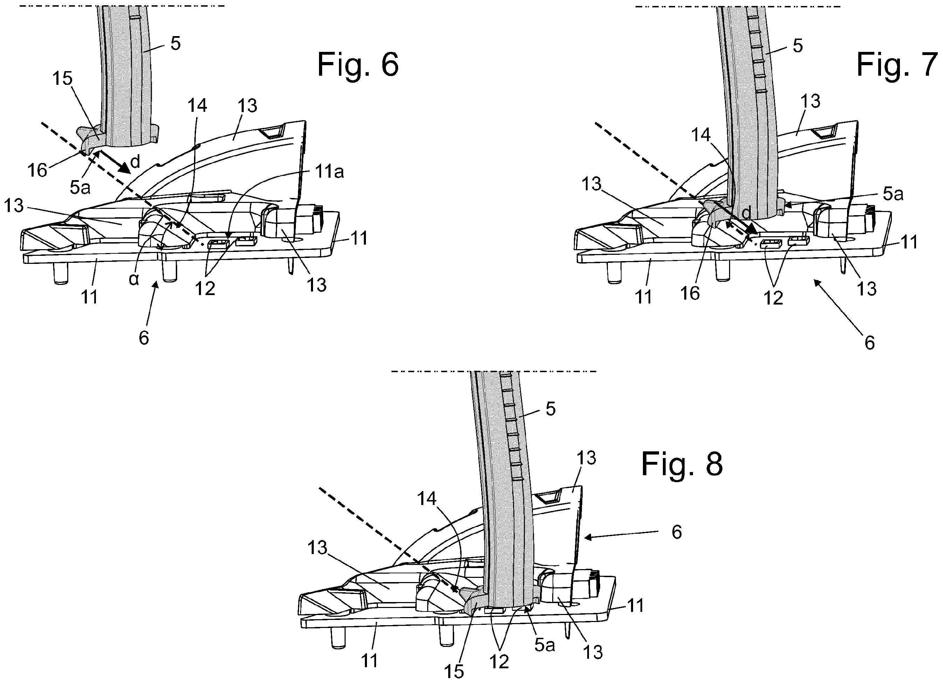

With particular reference to Figure 6, in addition the oblique guiding slide 14 is preferably substantially flat and rectilinear, and is slanted with respect to the upper face of the supporting board 11, or rather to the lying plane of the active area 11a of supporting board 11, by a given angle α preferably ranging between 10° and 60°.

Preferably the oblique guiding slide 14 is furthermore fixed onto the supporting board 11 so as to be locally substantially parallel to said mounting direction d.

Consequently, the supporting board 11 is preferably fixed on the rear casing 2 with an angle of inclination with respect to the mounting direction d preferably ranging between 10° and 60°.

Preferably, the oblique guiding slide 14 is finally incorporated in the protective cover 13.

More in detail, with reference to Figures 2, 3 and 5, a portion of protective cover 13 is preferably shaped so as to form the oblique guiding slide 14.

Preferably protective cover 13 is therefore arranged on supporting board 11 so that the portion of the cover defining the bottom of the oblique guiding slide 14, is arranged locally substantially parallel to said mounting direction d.

With reference to Figures 2, 3 and 4, the proximal end 5a of light-guide bar 5, in turn, is preferably provided with a preferably substantially triangular-shaped, platelike head 15 that extends to cover the active area 11a of supporting board 11, with its lower face locally skimmed over to the LED or LEDs 12; and with a spacer protrusion or shoulder 16 that juts out beyond the lower face of the platelike head 15, and is adapted to abut onto the supporting board 11 so as to keep the lower face of the platelike head 15 at a given distance from the underlying LEDs 12.

Moreover, the spacer protrusion or shoulder 16 allows/ facilitates an optimal positioning/alignment of the LEDs 12 with respect to the lower face of the platelike head 15, maximising the light flow that enters into the light-guide bar 5.

In addition, the spacer protrusion or shoulder 16 is also adapted to rest in free sliding manner onto the oblique guiding slide 14 of protective cover 13 during the coupling of the proximal end 5a of light-guide bar 5 with the light source 6.

Moreover, the spacer shoulder 16 preferably laterally flanks/delimits the lower face of the platelike head 15, preferably along part of the perimeter edge of the platelike head 15, in such a way as not to damage the LEDs 12 when the platelike head 15 touches the supporting board 11.

In the example shown, in particular, the platelike head 15 is preferably shaped substantially like a right-angled triangle, and the spacer shoulder 16 is arranged along the two catheti of the platelike head 15.

Operation of automotive light 1 is similar to that of the automotive lights currently most present on the market, and hence does not require any further explanations.

On the other hand, with particular reference to Figures 6, 7 and 8, the mounting of automotive light 1 comprises the steps of:
- placing and fixing the light source 6 in abutment against a specific supporting framework specially realized inside the rear casing 2;
- placing the light-guide bar 5 substantially at the mouth of the rear casing 2, aligning the supporting bracket (s) 7 of the light-guide bar 5 to the corresponding fastening pin(s) 8 present inside the rear casing 2; and lastly
- inserting the light-guide bar 5 into the rear casing 2 moving it in the mounting direction d, so as to fit the supporting bracket (s) 7 onto the corresponding fastening pin(s) 8, and at same time sliding the proximal end 5a of the light-guide bar 5 onto the oblique guiding slide 14 present on protective cover 13 of light source 6, up to the active area 11a of supporting board 11.

The advantages corresponding to the particular structure of lighting assembly 4 are remarkable.

Thanks to the presence of the oblique guiding slide 14 on the protective cover 13 of light source 6, the light-guide bar 5 can be inserted into the rear casing 2 with a single movement, while simultaneously coupling the proximal end 5a of the light-guide bar 5 to the light source 6 without subjecting the light-guide bar 5 to bending and/or torsions that are dangerous for its structural integrity.

In fact, the oblique guiding slide 14 present on the supporting board 11 leaves two degrees of freedom to the proximal end 5a of light-guide bar 5.

Lastly, it is clear that modifications and variations may be made to the automotive light 1 described above without however departing from the scope of the present invention.

For example, instead of extending inside the rear casing 2 with the flank 5b skimmed over the front half-shell 3, the light-guide bar 5 may extend inside the rear casing 2 so as to have solely the distal end substantially skimmed over the front half-shell 3.

Alternatively, the light-guide bar 5 may extend inside the rear casing 2, skimmed over a second light-guide body made of a photoconductive material and which, in turn, is adapted to guide/direct/channel/reflect the light emitted by the light source 6 towards the front half-shell 3.

## Claims

1. Automotive light (1) comprising: a substantially basin-shaped rear casing (2); a front half-shell (3) which is arranged to close the mouth of the rear casing (2); and at least one lighting assembly (4) that emits light on command, and is located inside the rear casing (2) so as to be able to selectively backlight a corresponding transparent or semitransparent sector (3a) of the front half-shell (3);
the lighting assembly (4) comprising: a light-guide bar (5) that is made of photoconductive material and is adapted to channel the light by total internal reflection; and at least one electrically-powered light source(6) which is located inside the rear casing (2), close to a proximal end (5a) of the light-guide bar (5), and is adapted to selectively direct, towards the same proximal end (5a), a light beam that enters into the body of the light-guide bar (5) ;
said light source (6) comprising: a supporting board (11) located inside the rear casing (2) adjacent to the proximal end (5a) of the light-guide bar (5); and one or more LEDs (12) placed on a face of the supporting board (11) within a given active area (11a), so as to face the proximal end (5a) of the light-guide bar (5);
the automotive light (1) **being characterised in that** the light source (6) additionally comprises an oblique guiding slide (14) which is slanted towards the active area (11a) of said supporting board (11), ends substantially at the perimeter border of said active area (11a), and is adapted to slide the proximal end (5a) of the light-guide bar (5) towards the active area (11a) of the supporting board (11); **and in that** the proximal end (5a) of the light-guide bar (5) is provided with a platelike head (15) that extends to cover the active area (11a) of the supporting board (11), with its lower face locally skimmed over the LED(s) (12), and with a spacer protrusion or shoulder (16) which juts out beyond the lower face of the platelike head (15), and is adapted to abut against the supporting board (11) so as to keep the lower face of the platelike head (15) at a given distance from the underlying LED or LEDs (12); said spacer protrusion or shoulder (16) being adapted to rest in free sliding manner onto said oblique guiding slide (14) during the coupling of the proximal end (5a) of the light-guide bar (5) with said light source (6).

2. Automotive light according to Claim 1, wherein the light-guide bar (5) is suspended/supported inside the rear casing (2) by one or more supporting brackets (7) which jut out cantilevered from the light-guide bar (5), and rest on the rear casing (2).

3. Automotive light according to Claim 2, wherein at least one of said supporting brackets (7) is made in one piece with said light-guide bar (5).

4. Automotive light according to Claim 2 or 3, wherein at least one of said supporting brackets (7) engages onto a corresponding fastening pin (8) that protrudes cantilevered inside said rear casing (2) parallel to a predetermined mounting direction (d).

5. Automotive light according to Claim 2, 3 or 4, wherein at least one of said supporting brackets (7) is rigidly fixed to the rear casing (2) via an anchor screw (10).

6. Automotive light according to Claim 4 or 5, wherein the oblique guiding slide (14) is substantially parallel to said predetermined mounting direction (d).

7. Automotive light according to any one of the preceding claims, wherein the oblique guiding slide (14) is substantially flat and rectilinear.

8. Automotive light according to any one of the preceding claims, wherein the oblique guiding slide (14) is slanted with respect to the lying plane of the supporting board (11) by an angle (α) ranging between 10° and 60°.

9. Automotive light according to any one of the preceding claims, wherein said light source (6) additionally comprises a substantially rigid, protective cover (13) which is arranged to partly cover the supporting board (11) and is shaped so as to at least partly flank/delimit/surround said active area (11a); the oblique guiding slide (14) being incorporated in said protective cover (13).

10. Automotive light according to any one of the preceding claims, wherein the active area (11a) of the supporting board (11) is adapted to receive in abutment the proximal end (5a) of the light-guide bar (5), and optionally is substantially complementary in shape to the same proximal end (5a) of the bar.

11. Automotive light according to any one of the preceding claims, wherein the platelike head (15) is substantially triangular in shape.

12. Automotive light according to any one of the preceding claims, wherein the spacer protrusion or shoulder (16) partly flanks/ delimits the lower face of the platelike head (15).

## Patentansprüche

1. Kraftfahrzeuglicht (1), umfassend: ein im Wesentlichen wannenförmiges Rückgehäuse (2); eine vordere Halbschale (3), die dazu angeordnet ist, die Mündung des Rückgehäuses (2) zu verschließen; und mindestens eine Beleuchtungsanordnung (4), die auf Befehl Licht abgibt und innerhalb des Rückgehäuses (2) angeordnet ist, um so dazu fähig zu sein, einen entsprechenden transparenten oder halbtransparenten Sektor (3a) der vorderen Halbschale (3) selektiv von hinten zu beleuchten;
wobei die Beleuchtungsanordnung (4) umfasst: einen Lichtleiterstab (5), der aus lichtleitendem Material hergestellt ist und dazu ausgelegt ist, das Licht durch Totalinnenreflexion zu kanalisieren; und mindestens eine elektrisch betriebene Lichtquelle (6), die in der Nähe eines proximalen Endes (5a) des Lichtleiterstabs (5) innerhalb des Rückgehäuses (2) angeordnet und dazu ausgelegt ist, zu demselben proximalen Ende (5a) selektiv einen Lichtstrahl zu richten, der in den Körper des Lichtleiterstabs (5) einfällt;
wobei die Lichtquelle (6) umfasst: eine Trägerplatte (11), die innerhalb des Rückgehäuses (2) dem proximalen Ende (5a) des Lichtleitertabs (5) benachbart angeordnet ist; und eine oder mehrere Leuchtdioden (12), die auf einer Fläche der Trägerplatte (11) in einem vorgegebenen aktiven Bereich (11a) so angeordnet sind, dass sie zu dem proximalen Ende (5a) des Lichtleiterstabs (5) hin weisen;
wobei das Kraftfahrzeuglicht (1) **dadurch gekennzeichnet ist, dass** die Lichtquelle (6) zusätzlich einen schrägen Führungsschieber (14) umfasst, der zu dem aktiven Bereich (11a) der Trägerplatte (11) hin geneigt ist, im Wesentlichen an dem umlaufenden Rand des aktiven Bereichs (11a) endet und dazu ausgelegt ist, das proximale Ende (5a) des Lichtleiterstabs (5) zu dem aktiven Bereich (11a) der Trägerplatte (11) hin zu verschieben; und dass das proximale Ende (5a) des Lichtleiterstabs (5) mit einem plattenartigen Kopf (15) ausgestattet ist, der sich erstreckt, um den aktiven Bereich (11a) der Trägerplatte (11) abzudecken, wobei seine Unterseite über der/den Leuchtdiode(n) (12) lokal streifend in Berührung ist, und mit einem Abstandhalterfortsatz oder einer Schulter (16), der/die über die Unterseite des plattenartigen Kopfs (15) hinaus ragt und dazu ausgelegt ist, gegen die Trägerplatte (11) zu stoßen, um die Unterseite des plattenartigen Kopfs (15) in einem vorgegebenen Abstand von der darunter liegenden Leuchtdiode oder den darunter liegenden Leuchtdioden (12) zu halten; wobei der Abstandhalterfortsatz oder die Schulter (16) dazu ausgelegt ist, während der Kopplung des proximalen Endes (5a) des Lichtleiterstabs (5) mit der Lichtquelle (6) frei gleitend auf dem schrägen Führungsschieber (14) zu ruhen.

2. Kraftfahrzeuglicht gemäß Anspruch 1, wobei der Lichtleiterstab (5) innerhalb des Rückgehäuses (2) durch eine oder mehrere Stützen (7) aufgehängt/abgestützt ist, die kragarmartig von dem Lichtleiterstab (5) aus abstehen und auf dem Rückgehäuse (2) ruhen.

3. Kraftfahrzeuglicht gemäß Anspruch 2, wobei mindestens eine der Stützen (7) mit dem Lichtleiterstab (5) einstückig ausgebildet ist.

4. Kraftfahrzeuglicht gemäß Anspruch 2 oder 3, wobei mindestens eine der Stützen (7) mit einem entsprechenden Befestigungsstift (8) in Eingriff ist, der kragarmartig innerhalb des Rückgehäuses (2) parallel zu einer vorbestimmten Montagerichtung (d) vorsteht.

5. Kraftfahrzeuglicht gemäß Anspruch 2, 3 oder 4, wobei mindestens eine der Stützen (7) über eine Ankerschraube (10) steif an dem Rückgehäuse (2) fixiert ist.

6. Kraftfahrzeuglicht gemäß Anspruch 4 oder 5, wobei der schräge Führungsschieber (14) im Wesentlichen parallel zu der vorbestimmten Montagerichtung (d) ist.

7. Kraftfahrzeuglicht gemäß einem der vorhergehenden Ansprüche, wobei der schräge Führungsschieber (14) im Wesentlichen flach und rechtwinklig ist.

8. Kraftfahrzeuglicht gemäß einem der vorhergehenden Ansprüche, wobei der schräge Führungsschieber (14) bezüglich der Lageebene der Trägerplatte (11) in einem Winkel (α), der in einem Bereich von 10° bis 60° liegt, geneigt ist.

9. Kraftfahrzeuglicht gemäß einem der vorhergehenden Ansprüche, wobei die Lichtquelle (6) zusätzlich einen im Wesentlichen steifen, schützenden Deckel (13) umfasst, der dazu angeordnet ist, die Stützplatte (11) teilweise abzudecken, und so geformt ist, dass er den aktiven Bereich mindestens teilweise flankiert/begrenzt/umgibt; wobei der schräge Führungsschieber (14) in den schützenden Deckel (13) integriert ist.

10. Kraftfahrzeuglicht gemäß einem der vorhergehenden Ansprüche, wobei der aktive Bereich (11a) der Trägerplatte (11) dazu ausgelegt ist, das proximale Ende (5a) des Lichtleiterstabs (5) anliegend aufzunehmen, und optional eine im Wesentlichen zu demselben proximalen Ende (5a) des Stabs komplementäre Form hat.

11. Kraftfahrzeuglicht gemäß einem der vorhergehenden Ansprüche, wobei der plattenartige Kopf (15) im Wesentlichen eine Dreiecksform hat.

12. Kraftfahrzeuglicht gemäß einem der vorhergehenden Ansprüche, wobei der Abstandhalterfortsatz oder die Schulter (16) die Unterseite des plattenartigen Kopfs (15) teilweise flankiert/begrenzt.

## Revendications

1. Phare d'automobile (1) comprenant : une coque arrière sensiblement en forme de cuve (2) ; une demi-coque avant (3) qui est agencée pour fermer l'ouverture de la coque arrière (2) ; et au moins un ensemble d'éclairage (4) qui émet de la lumière sur commande et est positionné à l'intérieur de la coque arrière (2) afin de pouvoir rétroéclairer un secteur transparent ou semi-transparent (3a) correspondant de la demi-coque avant (3) ;
l'ensemble d'éclairage (4) comprenant : une barre de guidage de lumière (5) qui est réalisée avec un matériau photoconducteur et est adaptée pour canaliser la lumière par réflexion interne totale ; et au moins une source de lumière (6) à alimentation électrique qui est positionnée à l'intérieur de la coque arrière (2), à proximité d'une extrémité proximale (5a) de la barre de guidage de lumière (5) et est adaptée pour diriger, sélectivement, vers la première extrémité proximale (5a), un faisceau lumineux qui entre dans le corps de la barre de guidage de lumière (5) ;
ladite source de lumière (6) comprenant : une plaque de support (11) située à l'intérieur de la coque arrière (2) adjacente à l'extrémité proximale (5a) de la barre de guidage de lumière (5) ; et une ou plusieurs diodes électroluminescentes (12) placées sur une face de la plaque de support (11) dans une zone active (11a) donnée, afin de faire face à l'extrémité proximale (5a) de la barre de guidage de lumière (5) ;
le phare d'automobile (1) étant **caractérisé en ce que** la source de lumière (6) comprend, de plus, une glissière de guidage oblique (14) qui est inclinée vers la zone active (11a) de ladite plaque de support (11), se termine sensiblement au niveau de la bordure périmétrale de ladite zone active (11a) et est adaptée pour faire glisser l'extrémité proximale (5a) de la barre de guidage de lumière (5) vers la zone active (11a) de la plaque de support (11) ; et **en ce que** l'extrémité proximale (5a) de la barre de guidage de lumière (5) est prévue avec une tête en forme de plaque (15) qui s'étend afin de recouvrir la zone active (11a) de la plaque de support (11), avec sa face inférieure localement au ras de la (des) diode(s) électroluminescente(s) (12), et avec une saillie ou épaulement d'espacement (16) qui fait saillie au-delà de la face inférieure de la tête en forme de plaque (15) et est adaptée pour venir en butée contre la plaque de support (11) afin de maintenir la face inférieure de la tête en forme de plaque (15) à une distance donnée de la (des) diode(s) électroluminescente(s) (12) sous-jacente(s) ; ladite saillie ou épaulement d'espacement (16) étant adapté(e) pour s'appuyer, de manière librement coulissante, sur ladite glissière de guidage oblique (14) pendant le couplage de l'extrémité proximale (5a) de la barre de guidage de lumière (5) avec ladite source de lumière (6) .

2. Phare d'automobile selon la revendication 1, dans lequel la barre de guidage de lumière (5) est suspendue/supportée à l'intérieur de la coque arrière (2) par une ou plusieurs consoles de support (7) qui font saillie en porte-à-faux de la barre de guidage de lumière (5) et s'appuient sur la coque arrière (2).

3. Phare d'automobile selon la revendication 2, dans lequel au moins l'une desdites consoles de support (7) est réalisée d'un seul tenant avec ladite barre de guidage de lumière (5).

4. Phare d'automobile selon la revendication 2 ou 3, dans lequel au moins l'une desdites consoles de support (7) se met en prise sur une broche de fixation (8) correspondante qui fait saillie en porte-à-faux à l'intérieur de ladite coque arrière (2) parallèle à une direction de montage (d) prédéterminée.

5. Phare d'automobile selon la revendication 2, 3 ou 4, dans lequel au moins l'une desdites consoles de support (7) est rigidement fixée à la coque arrière (2) via une vis d'ancrage (10).

6. Phare d'automobile selon la revendication 4 ou 5, dans lequel la glissière de guidage oblique (14) est sensiblement parallèle à ladite direction de montage (d) prédéterminée.

7. Phare d'automobile selon l'une quelconque des revendications précédentes, dans lequel la glissière de guidage oblique (14) est sensiblement plate et rectiligne.

8. Phare d'automobile selon l'une quelconque des revendications précédentes, dans lequel la glissière de guidage oblique (14) est inclinée par rapport au plan de la plaque de support (11) selon un angle (α) compris entre 10° et 60°.

9. Phare d'automobile selon l'une quelconque des revendications précédentes, dans lequel ladite source de lumière (6) comprend, de plus, un couvercle de protection (13) sensiblement rigide qui est agencé pour recouvrir partiellement la plaque de support (11) et est formée afin d'être à flanc de/délimiter/entourer partiellement ladite zone active (11a) ; la glissière de guidage oblique (14) étant incorporée dans ledit couvercle de protection (13) .

10. Phare d'automobile selon l'une quelconque des revendications précédentes, dans lequel la zone active (11a) de la plaque de support (11) est adaptée pour recevoir en butée l'extrémité proximale (5a) de la barre de guidage de lumière (5) et est facultativement sensiblement complémentaire du point de la vue de la forme de la même extrémité proximale (5a) de la barre.

11. Phare d'automobile selon l'une quelconque des revendications précédentes, dans lequel la tête en forme de plaque (15) est sensiblement triangulaire du point de vue de la forme.

12. Phare d'automobile selon l'une quelconque des revendications précédentes, dans lequel la saillie ou épaulement d'espacement (16) est à flanc de/délimite partiellement la face inférieure de la tête en forme de plaque (15).
